# EUROPÄISCHE PATENTSCHRIFT

(11) **EP 1 558 858 B1**
(45) Veröffentlichungstag und Bekanntmachung des Hinweises auf die Patenterteilung: **09.07.2008**
(21) Anmeldenummer: 03782184.0
(22) Anmeldetag: 06.11.2003
(51) Int. Cl.: F16F 13/10

(54) **HYDRAULISCH DÄMPFENDES LAGER, INSBESONDERE ZUM ABSTÜTZEN DES MOTORS EINES KRAFTFAHRZEUGS**
HYDRAULICALLY-DAMPED MOUNTING, IN PARTICULAR FOR SUPPORTING THE ENGINE IN A MOTOR VEHICLE
SUPPORT AMORTI HYDRAULIQUEMENT, EN PARTICULIER DESTINE A SOUTENIR LE MOTEUR D'UN VEHICULE AUTOMOBILE

(30) Priorität: 07.11.2002 DE 10251877
(43) Veröffentlichungstag der Anmeldung: 03.08.2005
(73) Patentinhaber: Trelleborg Automotive Technical Centre GmbH, 56203 Höhr-Grenzhausen (DE)
(72) Erfinder: BREGEAULT, Laurent, F-44850 St Mars du Désert (FR)
(74) Vertreter: Schober, Christoph D.
(86) Internationale Anmeldenummer: PCT/EP2003/012414
(87) Internationale Veröffentlichungsnummer: WO 2004/042250

(56) Entgegenhaltungen:
- EP-A- 0 326 504
- DE-A- 3 729 563
- DE-A- 3 834 099
- US-A- 4 458 888
- US-A- 4 763 884
- US-A- 4 856 750
- US-A- 5 172 893
- PATENT ABSTRACTS OF JAPAN Bd. 0130, Nr. 65 (M-797), 14. Februar 1989 (1989-02-14) & JP 63 266240 A (MAZDA MOTOR CORP), 2. November 1988 (1988-11-02)
- PATENT ABSTRACTS OF JAPAN Bd. 0051, Nr. 70 (M-094), 29. Oktober 1981 (1981-10-29) & JP 56 094043 A (TOYODA GOSEI CO LTD), 30. Juli 1981 (1981-07-30)

## Beschreibung

Die Erfindung betrifft ein hydraulisch dämpfendes Lager, das insbesondere zum Abstützen des Motors eines Kraftfahrzeugs dient. Das Lager ist mit einer Tragfeder versehen, die aus einem elastisch verformbaren Werkstoff gefertigt ist und einen mit einem Stützarm verbindbaren Lagerkern abstützt. Zudem ist das Lager mit einer Arbeitskammer versehen, die von der Tragfeder begrenzt und mit einer Hydraulikflüssigkeit befüllbar ist. Das Lager weist ferner eine Ausgleichskammer auf, die durch einen Überströmkanal mit der Arbeitskammer verbunden ist.

Die Merkmale des Oberbegriffs von Anspruch 1 sind aus Dokument US-A-5 172 893 bekannt.

Derartige Hydrolager vereinigen die Forderungen nach einer verhältnismäßig geringen Steifigkeit für hochfrequente Schwingungen insbesondere im akustischen Bereich und einer verhältnismäßig hohen Steifigkeit für niederfrequente Schwingungen relativ großer Amplitude. Hydrolager finden aus diesem Grund zum Abstützen des Motors im Kraftfahrzeugbau Anwendung, um einerseits akustische Schwingungen in einem weiten Bereich zu isolieren und andererseits beispielsweise durch Fahrbahnunebenheiten hervorgerufene niederfrequente Schwingungen großer Amplitude wirksam zu dämpfen.

Ein als Zweikammer-Hydrolager ausgebildetes hydraulisch dämpfendes Lager wird in der US 4,946,147 beschrieben. Das bekannte Hydrolager weist eine von einer Tragfeder begrenzte Arbeitskammer auf, die durch eine Zwischenplatte von einer Ausgleichskammer getrennt ist. In die Tragfeder ist ein Lagerkern einvulkanisiert, der eine Aufnahmeöffnung für einen mit dem Motor verbundenen Stützarm aufweist. In der Zwischenplatte ist ein Überströmkanal vorgesehen, der die mit Hydraulikflüssigkeit gefüllte Arbeitskammer mit der Ausgleichskammer verbindet. Die Dämpfung des Lagers wird vornehmlich durch die Trägheit der bei einer dynamischen Belastung zwischen der Arbeitskammer und der Ausgleichskammer strömenden Hydraulikflüssigkeit bewirkt. Die Dämpfung läßt sich daher durch die konstruktive Ausgestaltung des Überströmkanals beeinflussen.

Der Überströmkanal zeigt bei höheren Frequenzen keine Wirkung mehr, wenn die Hydraulikflüssigkeit den erregenden Schwingungen nicht mehr folgen kann. Hochfrequente Schwingungen führen daher zu einem Anstieg des Drucks in der Arbeitskammer mit der Folge, daß sich die dynamische Steifigkeit des Lagers erhöht. Um diesen für das Dämpfungsverhalten negativen Effekt zu kompensieren, ist die Zwischenplatte des bekannten Lagers mit einer Entkopplungsmembran versehen, die durch Schwingungen kleinerer Amplitude bewegt oder verformt wird und dadurch ein Überströmen der Hydraulikflüssigkeit zwischen der Arbeitskammer und der Ausgleichskammer verhindert. Demgegenüber führen Schwingungen größerer Amplitude zu einer mechanischen Blockade der Entkopplungsmembran und damit zu einem Überströmen der Hydraulikflüssigkeit durch den Überströmkanal. Durch die Entkopplungsmembran wird somit die Dämpfung von Schwingungen kleinerer Amplitude, wie sie im akustischen Bereich auftreten, von denen größerer Amplitude, wie sie häufig im niederfrequenten Bereich vorzufinden sind, entkoppelt.

Als Nachteil des bekannten Hydrolagers hat sich eine in fertigungstechnischer Hinsicht verhältnismäßig kostenintensive Herstellung erwiesen. Grund hierfür ist hauptsächlich die Zwischenplatte, welche die Arbeitskammer von der Ausgleichskammer trennt und auf Grund des Überströmkanals und der Entkopplungsmembran über eine komplexe Ausgestaltung verfügt. Darüber hinaus verursacht die Zwischenplatte eine vergleichsweise aufwendige Montage.

Der Erfindung liegt die Aufgabe zugrunde, ein hydraulisch dämpfendes Lager der eingangs genannten Art dahingehend weiterzubilden, daß sich eine verhältnismäßig einfache und kostengünstige Ausgestaltung erzielen läßt.

Zur Lösung dieser Aufgabe ist bei einem hydraulisch dämpfenden Lager mit den oben genannten Merkmalen in Übereinstimmung mit Anspruch 1 erfindungsgemäß vorgesehen, daß der Stützarm lösbar und zur Anpassung des Dämpfungsverhaltens auswechselbar mit dem Lagerkern verbunden und der Überströmkanal in den Stützarm integriert ist.

Das erfindungsgemäße Lager beruht auf der Erkenntnis, den die Arbeitskammer mit der Ausgleichskammer verbindenden Überströmkanal in dem Stützarm anzuordnen, mittels dem das Lager beispielsweise an dem Motor eines Kraftfahrzeugs befestigt ist. Hierdurch wird ein einfacher und kostengünstiger Aufbau erzielt, da eine separate Zwischenplatte zur Trennung von Arbeitskammer und Ausgleichskammer sowie zur Aufnahme des Überströmkanals entbehrlich ist. Der üblicherweise gegossene und lösbar mit dem Lagerkern verbundene Stützarm ermöglicht unterschiedliche Ausgestaltungen des Überströmkanals. Auf diese Weise kann das Dämpfungsverhalten des Lagers durch Auswechseln des Stützarms gezielt an den jeweiligen Anwendungsfall angepaßt werden. Das erfindungsgemäße Lager kann somit zur Lagerung verschiedener Motoren verwendet werden, wobei lediglich der Stützarm und der hieran integrierte Überströmkanal anzupassen sind. Einer in wirtschaftlicher Hinsicht kostengünstigen modularen Bauweise wird somit Rechnung getragen.

Vorteilhafte Weiterbildungen des erfindungsgemäßen Lagers gehen aus den Unteransprüchen hervor.

So ist es von Vorteil, wenn der Lagerkern einen Durchgang aufweist, in den der Stützarm einsteckbar ist. Das Einstecken des Stützarms in den Durchgang stellt ein einfaches Auswechseln des Stützarms sicher. Der sich durch eine polygonale Ausgestaltung des Durchgangs ergebende Formschluß zwischen Stützarm und Lagerkern trägt zu einer zuverlässigen Befestigung des Stützarms an dem Lagerkern bei.

Von Vorteil ist ferner, den Durchgang an einem Ende durch eine flexible Wandung zu verschließen, wobei die Ausgleichskammer bei in den Durchgang eingestecktem Stützarm durch die flexible Wandung und einer Stirnfläche des Stützarms begrenzt ist. Hierdurch wird eine sehr kompakte Bauweise erzielt

Um einerseits eine zuverlässige Befestigung des Stützarms an dem Lagerkern und andererseits eine exakte Positionierung des Stützarms in dem Durchgang zu erreichen, ist bevorzugt der Durchgang mit einem Vorsprung versehen, der bei in den Durchgang eingestecktem Stützarm formschlüssig in eine Ausnehmung eingreift, die an einer Seitenfläche des Stützarms angeordnet ist. Der beim Einstecken des Stützarms in den Durchgang in die Ausnehmung einrastende Vorsprung bewirkt einen Formschluß in Längsrichtung des Stützarms, der zu einer präzisen Positionierung des Stützarms in dem Durchgang beiträgt.

In einer bevorzugten Ausgestaltung des erfindungsgemäßen Lagers weist der Überströmkanal eine in die Arbeitskammer mündende Einlaßöffnung, eine in die Ausgleichskammer mündende Auslaßöffnung und eine die Einlaßöffnung und die Auslaßöffnung miteinander verbindende Strömungspassage auf, die sich vorzugsweise spiralförmig in dem Stützarm erstreckt. Die spiralförmige Ausgestaltung der Strömungspassage gewährleistet bei kompakter Bauweise eine vergleichsweise lange Flüssigkeitssäule und damit eine wirksame Dämpfung niederfrequenter Schwingungen und Schwingungen größerer Amplitude.

Vorteilhafterweise ist die Einlaßöffnung an einer der Arbeitskammer zugewandten unteren Fläche des Stützarms und die Auslaßöffnung an der Stirnfläche des Stützarms angeordnet, um einen in konstruktiver Hinsicht zweckmäßigen Aufbau des Lagers zu gewährleisten. Zweckmäßig ist ferner, wenn die Arbeitskammer rotationssymmetrisch ausgestaltet ist und einen sich zu der Einlaßöffnung konisch verjüngenden Trichter bildet. Der Trichter trägt dazu bei, daß eine auf die Tragfeder ausgeübte Belastung wirksam auf die in der Arbeitskammer befindliche Hydraulikflüssigkeit übertragen wird, um in Abhängigkeit von der Frequenz und der Amplitude der Belastung ein Überströmen der Hydraulikflüssigkeit durch den Überströmkanal zu bewirken.

In einer weiteren vorteilhaften Ausgestaltung des erfindungsgemäßen Lagers ist eine Entkopplungsmembran vorgesehen, die in einen in dem Stützarm eingebrachten Käfig aufgenommen ist, der über einen Entkopplungskanal mit der Arbeitskammer verbunden ist. Die Entkopplungsmembran entkoppelt Schwingungen kleinerer Amplitude, in dem diese die Entkopplungsmembran bewegen oder verformen und dadurch verhindern, daß die Hydraulikflüssigkeit durch den Überströmkanal strömt. Der zu der Entkopplungsmembran führende Entkopplungskanal bewirkt, daß bei hochfrequenten Schwingungen kleinerer Amplitude die in dem Entkopplungskanal befindliche Hydraulikflüssigkeit zu einer Schwingung erregt wird, die annähernd einer Eigenfrequenz der Tragfeder entspricht. Die sich auf diese Weise ergebende Resonanz hat eine Absenkung der dynamischen Steifigkeit in einem bestimmten Frequenzspektrum zur Folge, wodurch sich das Isolationsvermögen des Lagers in diesem Frequenzspektrum gezielt beeinflussen läßt.

Bevorzugt ist der Käfig an einer der Arbeitskammer abgewandten oberen Fläche des Stützarms offen und vorzugsweise mit Führungsflächen für Führungsabschnitte der Entkopplungsmembran versehen. Die offene Ausgestaltung des Käfigs an der oberen Fläche des Stützarms ermöglicht ein einfaches Einsetzen der Entkopplungsmembran in den Käfig. Zu einer praxisgerechten Montage tragen ferner die Führungsflächen des Käfigs bei, die mit den Führungsabschnitten der Entkopplungsmembran zusammenwirken, um ein gezieltes Einsetzen der Entkopplungsmembran in den Käfig sicherzustellen. Weiterhin ist es von Vorteil, den Käfig mit die Bewegung der Entkopplungsmembran begrenzenden Vorsprüngen zu versehen, um eine vorgegebene oszillierende Bewegung oder Verformung der Entkopplungsmembran zu gewährleisten.

Einzelheiten und weitere Vorteile des erfindungsgemäßen Lagers ergeben sich aus der nachfolgenden Beschreibung zweier bevorzugter Ausführungsbeispiele, die in den Zeichnungen dargestellt sind. Hierin zeigen:
- Fig. 1: eine Draufsicht auf ein hydraulisch dämpfendes Lager in einer ersten Ausführungsform;
- Fig. 2: einen Schnitt gemäß der Linie II-II in Fig. 1;
- Fig. 3: einen Schnitt gemäß der Linie III-III in Fig. 2;
- Fig. 4: eine perspektivische Ansicht des Lagers gemäß Fig. 1, die einen von einem Lagerkern getrennten Stützarm zeigt;
- Fig. 5: eine perspektivische Ansicht des Stützarms gemäß Fig. 4;
- Fig. 6: eine perspektivische Ansicht gemäß Fig. 4, die den in den Lagerkern eingesteckten Stützarm zeigt;
- Fig. 7: eine Draufsicht auf ein hydraulisch dämpfendes Lager in einer zweiten Ausführungsform;
- Fig. 8: einen Schnitt gemäß der Linie VIII-VIII in Fig. 7;
- Fig. 9: einen Schnitt gemäß der Linie IX-IX in Fig. 8;
- Fig. 10: eine perspektivische Ansicht des Lagers gemäß Fig. 7, die einen von einem Lagerkern getrennten Stützarm zeigt;
- Fig. 11: eine perspektivische Ansicht des Stützarms gemäß Fig. 10 und
- Fig. 12: eine perspektivische Ansicht gemäß Fig. 10, die den in den Lagerkern eingesteckten Stützarm zeigt.

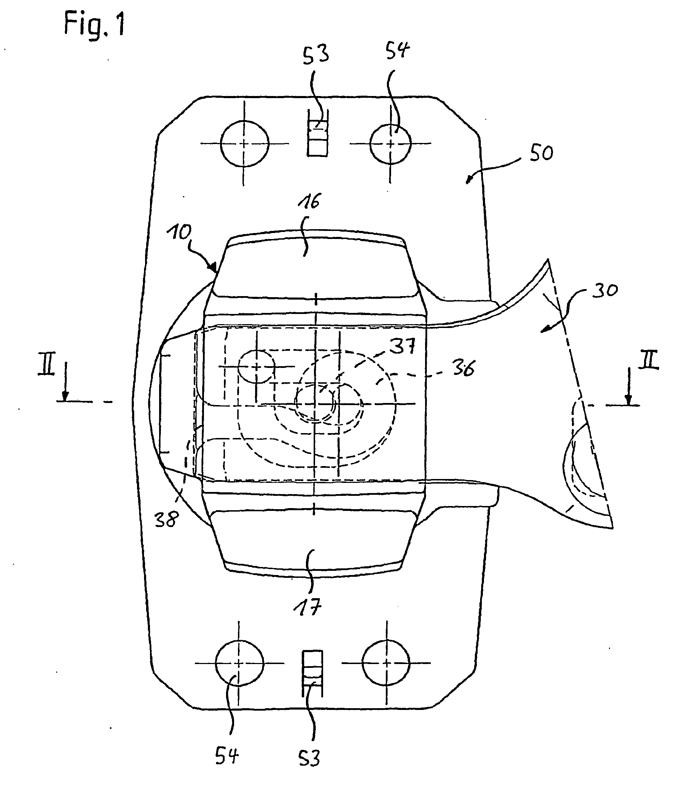

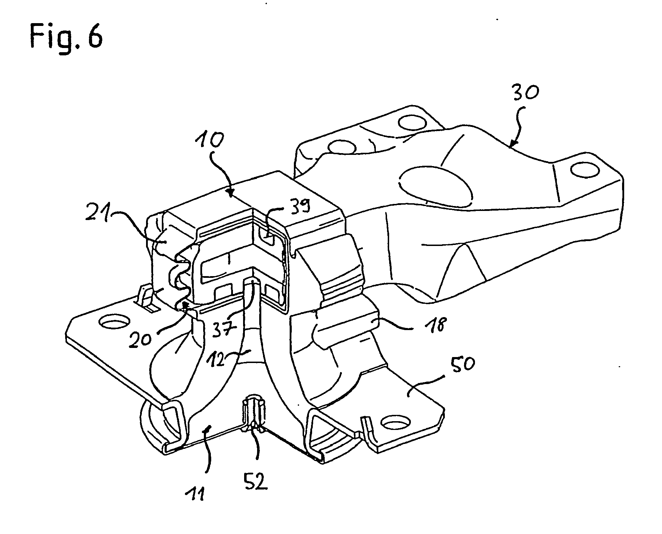

Das in den Fig. 1 bis 6 dargestellte hydraulisch dämpfende Lager dient dazu, den Motor eines Kraftfahrzeugs dämpfend abzustützen. Das Lager weist eine Tragfeder 10 auf, die aus einem elastomeren Material hergestellt ist. Die Tragfeder 10 ist auf einer starren Grundplatte 50 angeordnet, die aus Metall, beispielsweise Aluminium, besteht und an der Karosserie des Kraftfahrzeugs befestigt ist. Weiterhin ist die Tragfeder 10 mit einem aus Metall, beispielsweise Aluminium, gefertigten Stützarm 30 verbunden, der an dem Motor des Kraftfahrzeugs befestigt ist.

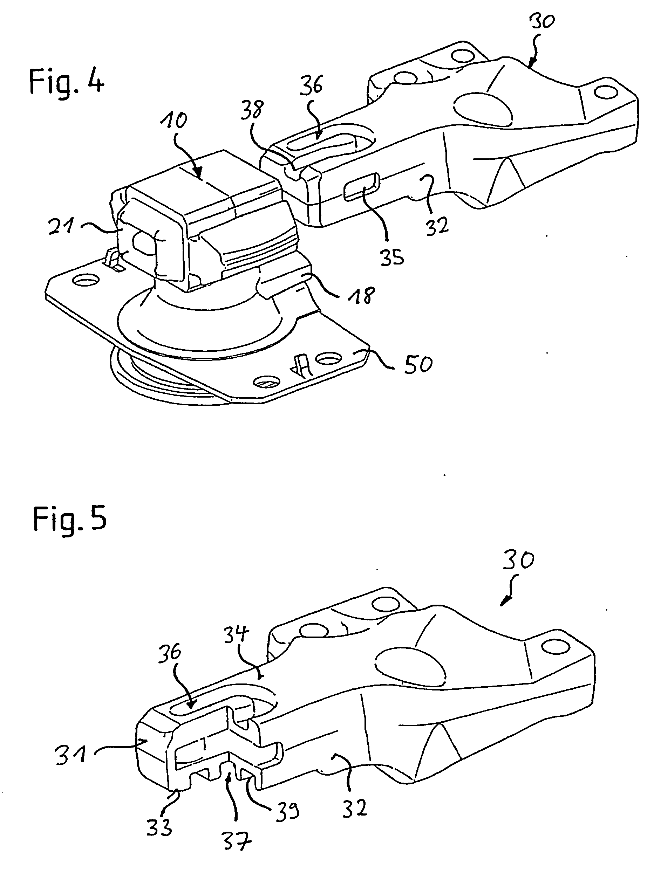

In die Tragfeder 10 ist ein Lagerkern 13 einvulkanisiert, der einen im Querschnitt annähernd rechteckförmigen Durchgang 14 aufweist. In den Durchgang 14 ist der Stützarm 30 eingesteckt. Um den Stützarm 30 zuverlässig mit dem Lagerkern 13 zu verbinden, ist der Durchgang 14 mit einem nicht dargestellten Vorsprung versehen, der formschlüssig in eine Ausnehmung 35 des Stützarms 30 eingreift. Die Ausnehmung 35 ist an einer Seitenfläche 32 des Stützarms 30 angeordnet, wie insbesondere Fig. 4 erkennen läßt.

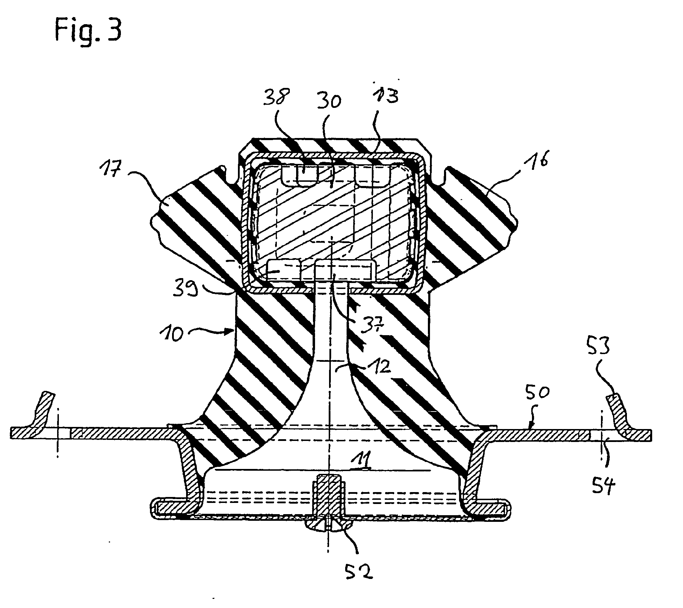

Die Tragfeder 10 ist im Bereich des Lagerkerns 13 mit zwei Puffern 16, 17 versehen, die sich senkrecht zur Längsrichtung des Stützarms 30 erstrecken. Die Puffer 16, 17 wirken mit Anschlagflächen eines nicht dargestellten Gehäuses zusammen, das die Tragfeder 10 umgibt und an der Grundplatte 50 befestigt ist. Für die Befestigung des aus Metall bestehenden Gehäuses ist die Grundplatte 50 mit Laschen 53 versehen, wie insbesondere Fig. 3 erkennen läßt. Die Laschen 53 ermöglichen eine exakte Positionierung des Gehäuses auf der Grundplatte 50 und sind neben Bohrungen 54 angeordnet, die sowohl zur Anbindung des Gehäuses als auch zur Befestigung der Grundplatte 50 an der Karosserie des Kraftfahrzeugs dienen können.

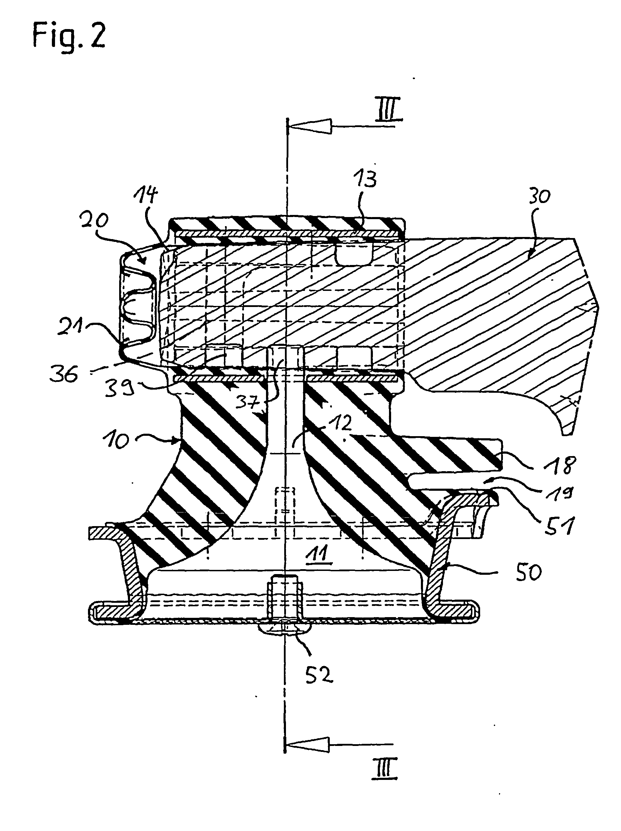

Wie insbesondere die Fig. 2, 3 und 6 erkennen lassen, begrenzt die Tragfeder 10 eine Arbeitskammer 11, die mit einer Hydraulikflüssigkeit gefüllt ist. Die Arbeitskammer 11 ist durch einen Überströmkanal 36 mit einer Ausgleichskammer 20 verbunden. Die Ausgleichskammer 20 befindet sich bei in den Durchgang 14 eingestecktem Stützarm 30 zwischen einer Stirnfläche 31 des Stützarms 30 und einer flexiblen Wandung 21, die den Durchgang 14 an einem Ende verschließt. Der in dem Stützarm 30 ausgestaltete Überströmkanal 36 weist eine in die Arbeitskammer 11 mündende Einlaßöffnung 37, eine in die Ausgleichskammer 20 mündende Auslaßöffnung 38 und eine die Einlaßöffnung 37 und die Auslaßöffnung 38 miteinander verbindende Strömungspassage 39 auf. Die Strömungspassage 39 erstreckt sich spiralförmig in dem Stützarm 30, wie insbesondere Fig. 1 erkennen läßt. Die Einlaßöffnung 37 ist an einer der Arbeitskammer 11 zugewandten unteren Fläche 33 des Stützarms 30 angeordnet, wohingegen sich die Auslaßöffnung 38 an der Stirnfläche 31 des Stützarms 30 befindet. Wie insbesondere die Fig. 2 und 3 erkennen lassen, bildet die rotationssymmetrisch ausgestaltete Arbeitskammer 11 einen Trichter 12, der sich zu der Einlaßöffnung 37 konisch verjüngt.

Schwingungen des Motors, die über den Stützarm 30 an die Tragfeder 10 übertragen werden, oder beispielsweise durch Fahrbahnunebenheiten hervorgerufene Schwingungen der Karosserie, die von der Grundplatte 50 an die Tragfeder 10 weitergeleitet werden, führen zu Verformungen der Tragfeder 10, welche die in der Arbeitskammer 11 befindliche Hydraulikflüssigkeit beaufschlagen. Die inkompressible Hydraulikflüssigkeit wird auf diese Weise durch den Überströmkanal 36 in die Ausgleichskammer 20 verdrängt. Die Trägheit der durch den Überströmkanal 36 strömenden Hydraulikflüssigkeit bewirkt dabei eine Dämpfung der Schwingungen. Schwingungen übermäßiger Amplitude werden zudem durch die Puffer 16, 17 gedämpft, die mit den Anschlagflächen des Gehäuses zusammenwirken. Darüber hinaus ist die Tragfeder 10 mit einer vorkragenden Zunge 18 versehen, die, wie insbesondere aus Fig. 2 ersichtlich ist, durch einen Spalt 19 von einer Anschlagfläche 51 der Grundplatte 50 beabstandet ist und somit ebenfalls Schwingungen übermäßiger Amplitude puffert. Im Unterschied zu den Puffern 16, 17 wirkt die Zunge 18 in axialer Richtung des Lagers.

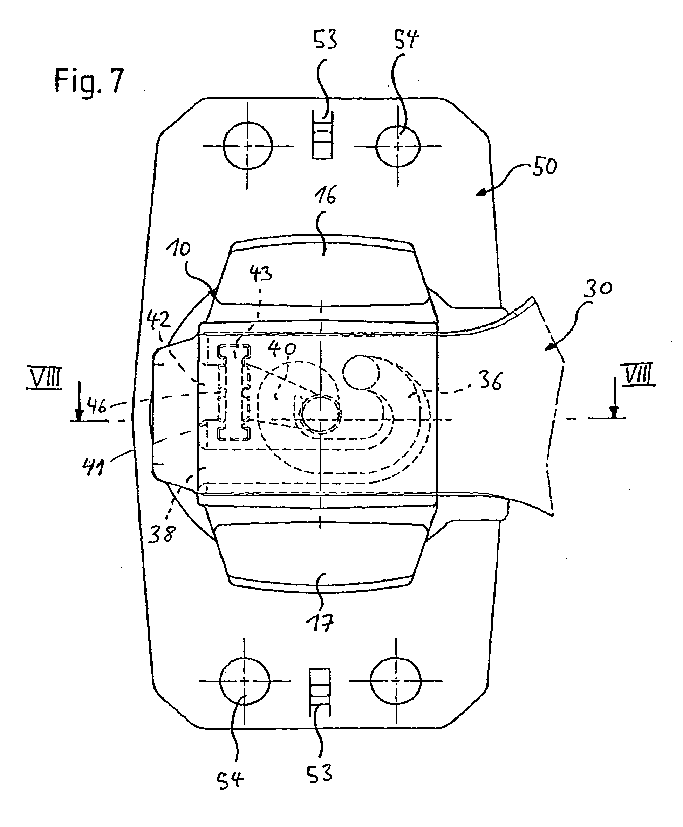

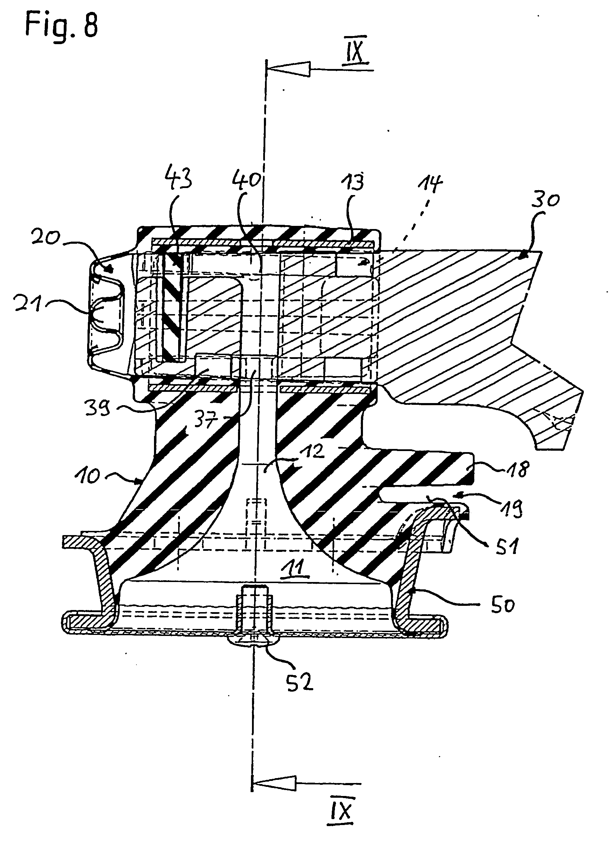

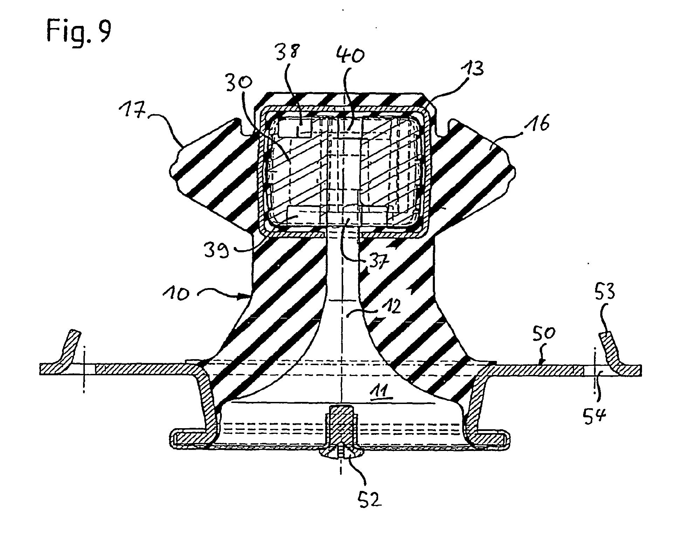

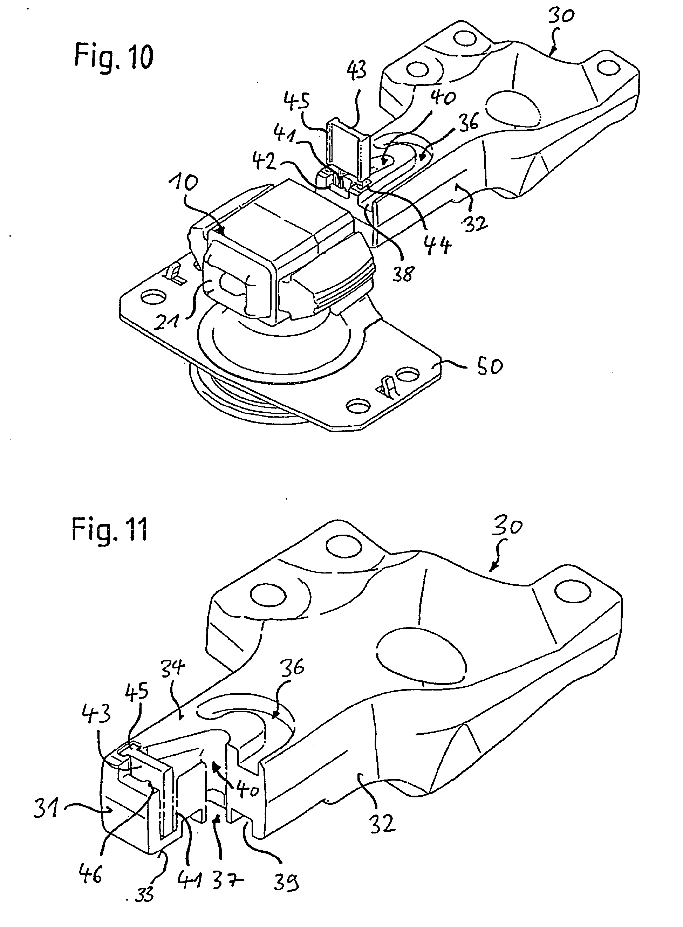

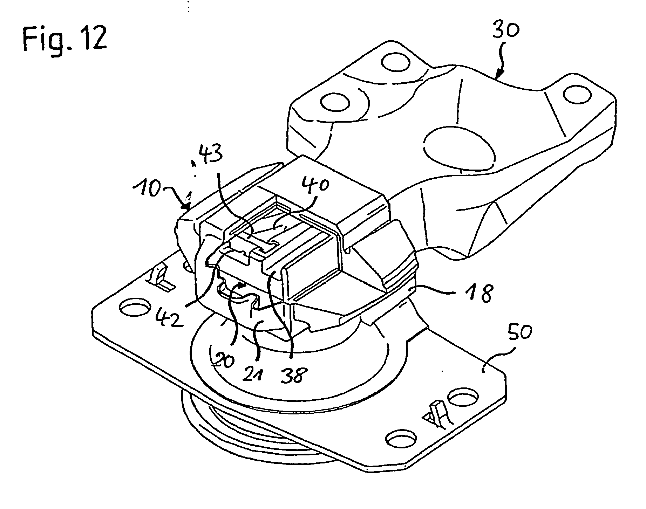

Das in den Fig. 7 bis 12 dargestellte hydraulisch dämpfende Lager unterscheidet sich von der zuvor beschriebenen Ausführungsform durch eine Entkopplungsmembran 43, die in einem Käfig 41 aufgenommen ist, der in den Stützarm 30 eingebracht ist. Ein Entkopplungskanal 40 führt von der Einlaßöffnung 37 zu dem Käfig 41. Der Käfig 41 weist eine Entkopplungsöffnung 42 auf, die in die Ausgleichskammer 20 mündet. Zudem ist der Käfig 41 an einer der Arbeitskammer 11 abgewandten oberen Fläche 34 des Stützarms 30 offen ausgestaltet. Die offene Ausgestaltung des Käfigs 41 gewährleistet ein einfaches Einsetzen der Entkopplungsmembran 43, wie beispielsweise aus Fig. 10 ersichtlich ist. Das Einsetzen der Entkopplungsmembran 43 wird überdies durch Führungsflächen 44 des Käfigs 41 erleichtert, die, wie die Fig. 10 und 11 erkennen lassen, eine Führung von Führungsabschnitten 45 der Entkopplungsmembran 43 hervorrufen.

Die Entkopplungsmembran 43 wird durch Schwingungen kleinerer Amplitude der Hydraulikflüssigkeit in dem Käfig 41 verformt oder bewegt. Die Bewegung der Entkopplungsmembran 43 wird durch Vorsprünge 46, die in dem Käfig 41 angeordnet sind, gezielt begrenzt. Die Entkopplungsmembran 43 trägt somit zu einer Entkopplung von Schwingungen kleinerer Amplitude bei, in dem diese nicht zu einem Überströmen der Hydraulikflüssigkeit durch den Überströmkanal 36 führen. Ein Überströmen der Hydraulikflüssigkeit wird durch Schwingungen größerer Amplitude, wie sie häufig im niederfrequenten Bereich vorkommen, hervorgerufen. Darüber hinaus bewirkt der Entkopplungskanal 40 eine Absenkung der dynamischen Steifigkeit des Lagers. Dies ist in erster Linie darauf zurückzuführen, daß die in dem Entkopplungskanal 40 befindliche Hydraulikflüssigkeit bei hochfrequenten Schwingungen zu Resonanzen mit Eigenfrequenzen der Tragfeder 10 erregt werden.

Die zuvor beschriebenen Ausführungsformen eines hydraulisch dämpfenden Lagers zeichnen sich durch eine kompakte Bauweise und eine in wirtschaftlicher Hinsicht kostengünstige Ausgestaltung aus. Grund hierfür ist in erster Linie, daß der Überströmkanal 36 und der Entkopplungskanal 40 einschließlich des Käfigs 41 in den Stützarm 30 integriert sind. Eine separate Zwischenwand zur Trennung der Arbeitskammer und der Ausgleichskammer sowie zur Aufnahme des Überströmkanals ist hierdurch entbehrlich. Der auswechselbar mit dem Lagerkern 13 verbundene Stützarm 30 ermöglicht eine modulare Bauweise des Lagers, indem der Lagerkern 13 mit unterschiedlich ausgestalteten Stützarmen kombiniert wird. Auf diese Weise ist es möglich, ohne Änderung der funktionalen Gestaltung der Tragfeder 10 einen Entkopplungskanal 40 und eine Entkopplungsmembran 43 oder verschiedene Ausgestaltungen des das Dämpfungsverhalten des Lagers maßgeblich beeinflussenden Überströmkanals 36 vorzusehen. Nicht zuletzt wird durch eine mittels einer Schraube 52 verschließbaren Öffnung in der im wesentlichen wannenförmigen Grundplatte 50 ein einfaches Befüllen der Arbeitskammer 11 und der Ausgleichskammer 20 mit Hydraulikflüssigkeit sichergestellt.

### Bezugszeichenliste

- 10: Tragfeder
- 11: Arbeitskammer
- 12: Trichter
- 13: Lagerkern
- 14: Durchgang
- 16: Puffer
- 17: Puffer
- 18: Zunge
- 19: Spalt
- 20: Ausgleichskammer
- 21: Wandung

- 30: Stützarm
- 31: Stirnfläche
- 32: Seitenfläche
- 33: untere Fläche
- 34: obere Fläche
- 35: Ausnehmung
- 36: Überströmkanal
- 37: Einlaßöffnung
- 38: Auslaßöffnung
- 39: Strömungspassage
- 40: Entkopplungskanal
- 41: Käfig
- 42: Entkopplungsöffnung
- 43: Entkopplungsmembran
- 44: Führungsfläche
- 45: Führungsabschnitt
- 46: Vorsprung

- 50: Grundplatte
- 51: Anschlagfläche
- 52: Schraube
- 53: Lasche
- 54: Bohrung

## Patentansprüche

1. Hydraulisch dämpfendes Lager, insbesondere zum Abstützen des Motors eines Kraftfahrzeugs, mit einer Tragfeder (10), die aus einem elastisch verformbaren Werkstoff gefertigt ist und einen mit einem Stützarm (30) verbundenen Lagerkern (13) abstützt, einer Arbeitskammer (11), die von der Tragfeder (10) begrenzt und mit einer Hydraulikflüssigkeit gefüllt ist, und einer Ausgleichskammer (20), die durch einen Überströmkanal (36) mit der Arbeitskammer (11) verbunden ist, **dadurch gekennzeichnet, dass** der Überströmkanal (36) in den Stützarm (30) integriert ist und der Stützarm (30) lösbar und zur Anpassung des Dämpfungsverhaltens auswechselbar mit dem Lagerkern (13) verbunden ist.

2. Hydraulisch dämpfendes Lager nach Anspruch 1, **dadurch gekennzeichnet, dass** der Lagerkern (13) einen Durchgang (14) aufweist, in den der Stützarm (30) einsteckbar ist.

3. Hydraulisch dämpfendes Lager nach Anspruch 2, **dadurch gekennzeichnet, dass** der Durchgang (14) an einem Ende durch eine flexible Wandung (21) verschlossen ist, wobei die Ausgleichskammer (20) bei in den Durchgang (14) eingestecktem Stützarm (30) durch die flexible Wandung (21) und einer Stirnfläche (31) des Stützarms (30) begrenzt ist.

4. Hydraulisch dämpfendes Lager nach Anspruch 2 oder 3, **dadurch gekennzeichnet, dass** der Durchgang (14) mit einem Vorsprung versehen ist, der bei in den Durchgang (14) eingestecktem Stützarm (30) formschlüssig in eine Ausnehmung (35) eingreift, die an einer Seitenfläche (32) des Stützarms (30) angeordnet ist.

5. Hydraulisch dämpfendes Lager nach einem der Ansprüche 1 bis 4, **dadurch gekennzeichnet, dass** der Überströmkanal (36) eine in die Arbeitskammer (11) mündende Einlaßöffnung (37), eine in die Ausgleichskammer (20) mündende Auslaßöffnung (38) und eine die Einlaßöffnung (37) und die Auslaßöffnung (38) miteinander verbindende Strömungspassage (39) aufweist, die sich vorzugsweise spiralförmig in dem Stützarm (30) erstreckt.

6. Hydraulisch dämpfendes Lager nach Anspruch 5, **dadurch gekennzeichnet, dass** die Einlaßöffnung (37) an einer der Arbeitskammer (11) zugewandten unteren Fläche (33) des Stützarms (30) und die Auslaßöffnung (38) an der Stirnfläche (31) des Stützarms (30) angeordnet ist.

7. Hydraulisch dämpfendes Lager nach Anspruch 6, **dadurch gekennzeichnet, dass** die Arbeitskammer (11) rotationssymmetrisch ausgestaltet ist und einen sich zu der Einlaßöffnung (37) konisch verjüngenden Trichter (12) bildet.

8. Hydraulisch dämpfendes Lager nach einem der Ansprüche 1 bis 7, **dadurch gekennzeichnet, dass** eine Entkopplungsmembran (43) in einem in den Stützarm (30) eingebrachten Käfig (41) aufgenommen ist, der über einen Entkopplungskanal (40) mit der Arbeitskammer (11) verbunden ist.

9. Hydraulisch dämpfendes Lager nach Anspruch 8, **dadurch gekennzeichnet, dass** der Käfig (41) an einer der Arbeitskammer (11) abgewandten oberen Fläche (34) des Stützarms (30) offen und vorzugsweise mit Führungsflächen (44) für Führungsabschnitte (45) der Entkopplungsmembran (43) versehen ist.

10. Hydraulisch dämpfendes Lager nach Anspruch 8 oder 9, **dadurch gekennzeichnet, dass** der Käfig (41) mit die Bewegung der Entkopplungsmembran (43) begrenzenden Vorsprüngen (46) versehen ist.

## Claims

1. Hydraulically damped mounting in particular for supporting the engine in a motor vehicle, with a support spring (10) made of an elastically deformable material and which supports a mounting core (13) connected to a supporting arm (30), a working chamber (11) limited by the support spring (10) and which is filled with a hydraulic fluid, and an equalisation chamber (20) which is connected to the working chamber (11) by means of an overflow channel (36), **characterised in that** the overflow channel (36) is integrated into the supporting arm (30) and that the supporting arm (30) is detachably connected to the mounting core (13) so that it can be replaced by way of adjustment of the dampening properties.

2. Hydraulically damped mounting according to Claim 1 **characterised in that** the mounting core (13) has an aperture (14) into which the supporting arm (30) can be fitted.

3. Hydraulically damped mounting according to Claim 2 **characterised in that** the aperture (14) is closed at one end by a flexible wall (21), the equalisation chamber (20) being confined by the flexible wall (21) and an end face (31) of he supporting arm (30) while the supporting arm (30) is fitted into the aperture (14).

4. Hydraulically damped mounting according to Claims 2 or 3 **characterised in that** the aperture (14) is provided with a protrusion which, when the supporting arm (30) is fitted into the aperture (14), engages positively in a recess (35) located in the side surface (32) of the supporting arm (30).

5. Hydraulically damped mounting according to one of the claims 1 to 4 **characterised in that** the overflow channel (36) has an inlet opening (37) leading into the working chamber (11), an outlet opening (38) leading into the equalisation chamber (20) and a fluid duct (39) connecting the inlet opening (37) and the outlet opening (38) which preferably extends in a spiral shape within the supporting arm (30).

6. Hydraulically damped mounting according to Claim 5 **characterised in that** the inlet opening (37) is located on one of the lower surfaces (33) of the supporting arm (30) facing the working chamber (11) and the outlet opening (38) is located on the end face (31) of the supporting arm (30).

7. Hydraulically damped mounting according to Claim 6 **characterised in that** the working chamber (11) is configured in a rotationally symmetrical way and forms a funnel (12) tapering conically towards the inlet opening (37).

8. Hydraulically damped mounting according to one of the claims 1 to 7 **characterised in that** a decoupling membrane (43) is accommodated in a cage (41) housed in the supporting arm (30) and said membrane is connected via a decoupling channel (40) to the working chamber (11).

9. Hydraulically damped mounting according to Claim 8 **characterised in that** the cage (41) is open at one of the upper surfaces (34) of the supporting arm (30) facing away from the working chamber (11) and preferably has guiding areas (44) for the guiding section (45) of the decoupling membrane (43).

10. Hydraulically damped mounting according to Claims 8 or 9 **characterised in that** the cage (41) is provided with protrusions (46) which restrict the movement of the decoupling membrane (43).

## Revendications

1. Support à amortissement hydraulique, en particulier pour soutenir le moteur d'un véhicule automobile, comprenant un ressort porteur (10), qui est fabriqué en un matériau élastiquement déformable et qui soutient un noyau de support (13) relié à un bras de soutien (30), comprenant une chambre de travail (11) qui est limitée par le ressort porteur (10) et qui est remplie d'un liquide hydraulique, et comprenant une chambre de compensation (20) qui est reliée à la chambre de travail (11) via un canal de déversement (36),
**caractérisé en ce que** le canal de déversement (36) est intégré dans le bras de soutien (30) et le bras de soutien (30) est relié au noyau de support (13) de façon détachable et interchangeable pour l'adaptation du comportement d'amortissement.

2. Support à amortissement hydraulique selon la revendication 1, **caractérisé en ce que** le noyau de support (13) comporte une traversée (14) dans laquelle le bras de soutien (30) peut être enfiché.

3. Support à amortissement hydraulique selon la revendication 2, **caractérisé en ce que** la traversée (14) est obturée à une extrémité par une paroi flexible (21), la chambre de compensation (20) étant limitée, lorsque le bras de soutien (30) est enfiché dans la traversée (14), par la paroi flexible (21) et par une surface frontale (31) du bras de soutien (30).

4. Support à amortissement hydraulique selon la revendication 2 ou 3, **caractérisé en ce que** la traversée (14) est pourvu d'une saillie qui, lorsque le bras de soutien (30) est enfiché dans la traversée (14), s'engage en coopération de formes dans un évidement (35) qui est agencé sur une surface latérale (32) du bras de soutien (30).

5. Support à amortissement hydraulique selon l'une des revendications 1 à 4, **caractérisé en ce que** le canal de déversement (36) comporte une ouverture d'entrée (37) qui débouche dans la chambre de travail (11), une ouverture de sortie (38) qui débouche dans la chambre de compensation (20), et un passage d'écoulement (39) qui relie l'une à l'autre l'ouverture d'entrée (37) et l'ouverture de sortie (38), et qui s'étend de préférence en forme de spirale dans le bras de soutien (30).

6. Support à amortissement hydraulique selon la revendication 5, **caractérisé en ce que** l'ouverture d'entrée (37) est agencée sur une surface inférieure (33) du bras de soutien (30) tournée vers la chambre de travail (11), et l'ouverture de sortie (38) est agencée sur la surface frontale (31) du bras de soutien (30).

7. Support à amortissement hydraulique selon la revendication 6, **caractérisé en ce que** la chambre de travail (11) est conçue à symétrie de révolution et forme un entonnoir (12) qui va en se rétrécissant de manière conique vers l'ouverture d'entrée (37).

8. Support à amortissement hydraulique selon l'une des revendications 1 à 7, **caractérisé en ce qu'**une membrane de découplage (43) est reçue dans une cage (41) intégrée dans le bras de soutien (30) et reliée à la chambre de travail (11) via un canal de découplage (40).

9. Support à amortissement hydraulique selon la revendication 8, **caractérisé en ce que** la cage (41) est ouverte au niveau d'une surface supérieure (34) du bras de soutien (30) détournée de la chambre de travail (11), et est de préférence pourvue de surfaces de guidage (44) pour des tronçons de guidage (45) de la membrane de découplage (43).

10. Support à amortissement hydraulique selon la revendication 8 ou 9, **caractérisé en ce que** la cage (41) est dotée de saillies (46) qui limitent le mouvement de la membrane de découplage (43)
